# EUROPEAN PATENT APPLICATION

(11) **EP 3 912 524 A1**
(43) Date of publication of application: **24.11.2021**
(21) Application number: 20175249.0
(22) Date of filing: 18.05.2020
(51) Int. Cl.: A47J 36/00, A47J 36/32, G09B 19/00, G16H 20/60, H05B 1/02

(54) **LEGUMES PREPARATION APPLIANCE AND METHOD**

(71) Applicant: Koninklijke Philips N.V., 5656 AG Eindhoven (NL)
(72) Inventor: TANG, Jiani, 5656 AE Eindhoven (NL); LI, Ming, 5656 AE Eindhoven (NL)
(74) Representative: Kapoor, Pavan Puneet

(57) **Abstract**

A kitchen appliance (10) is disclosed for preparing legumes. The kitchen appliance comprises a food preparation chamber (20) thermally coupled to a heating element (38); and a microcontroller (34) responsive to a user input indicative of a target reduction value of raffinose family oligosaccharides content within said legumes. The microcontroller is arranged to control a duration of a soaking process of said legumes in water within the food processing chamber by controlling the heating element such as to maintain the water temperature within said food preparation chamber at a temperature in a range of 40-70°C, preferably 50-65°C, during said soaking process, said duration of the soaking process being a function of said indicated target reduction value and generate a control signal indicative of the end of said soaking process for triggering the removal of said water from the food preparation chamber. Also disclosed is a method of preparing legumes for controlling the RFO content of such legumes.

## Description

### FIELD OF THE INVENTION

The present invention relates to a kitchen appliance for preparing legumes, the kitchen appliance comprising a food preparation chamber thermally coupled to a heating element and a microcontroller responsive to a user input and arranged to control said heating element.

The present invention further relates to a method of preparing legumes.

### BACKGROUND OF THE INVENTION

Legumes can contribute to a healthy diet as they provide a wide range of beneficial nutrients such as proteins, fats, dietary fibers, B-group vitamins, e.g. thiamine, riboflavin and niacin, minerals and phytochemicals. Despite this, legume consumption is typically below recommended levels. This is because the consumption of legumes is associated with negative digestive side-effects, most notably flatulence. This is caused by the presence of certain types of oligosaccharides in legumes that are commonly referred to as the raffinose family of oligosaccharides (RFOs) including oligosaccharides such as raffinose, stachyose and verbascose. The primary reasons why RFOs cause digestive upsets is because humans lack the enzyme α-galactosidase required to hydrolyse the RFOs, causing the RFOs to reach the large intestine where their bacterial fermentation causes the production of gases such as hydrogen, carbon dioxide and methane. Such gas production not only can lead to gastric discomfort and bloating, but also causes flatulence during which these gases are expelled from the human body. Many people avoid eating legumes for these reasons, thereby missing out on the aforementioned dietary benefits of these food products.

There are many well-known approaches for reducing the gastric discomfort associated with eating legumes. A common industry practice is processing the legumes to achieve RFO removal through alcohol extraction, such that the processed legumes can be consumed without the fear of gastric side-effects whilst the extracted RFOs may be purified and used as prebiotic ingredients. Another approach is to add α-galactosidase to the legumes to bolster the ability of the human digestive system to hydrolyse the RFOs before they reach the large intestine. Also, domestic processing of legumes prior to their preparation is commonplace, such as soaking, cooking, germination and fermentation, in order to reduce their RFO content.

US 6,238,725 B1 discloses a method of preparing a legume in which the flatulence-causing oligosaccharides are removed by soaking the legume in a water bath in stagnant, sprayed or flowing water at a first temperature which is above ambient temperatures and below a critical rehydration temperature under conditions effective and for a period of time sufficient to produce a legume having a moisture content of at least 50% of that of a fully hydrated legume. The legume is subsequently soaked and heated in the water bath at a second temperature at a pH ranging from about 5.5 to about 9.0 under conditions effective to substantially remove all of the flatulence-causing oligosaccharides therefrom. The second temperature is greater than the critical rehydration temperature and the first temperature, but less than an inactivation temperature of an oligosaccharide reducing enzyme present in the legume.

The aforementioned legume treatments have in common that they seek to effectively remove the RFOs from the legumes to suppress unwanted gastric side-effects such as flatulence associated with consuming the legumes. The drawback of such approaches is that the dietary benefits of the legumes are significantly reduced as well.

### SUMMARY OF THE INVENTION

The present invention seeks to provide a kitchen appliance in which legumes can be prepared in a manner that is individualized to a particular user such that the RFO content in the legumes can be reduced to a level that is optimal for that user.

The present invention further seeks to provide a method of preparing legumes such that their RFO content can be accurately controlled.

According to an aspect, there is provided a kitchen appliance for preparing legumes, the kitchen appliance comprising a food preparation chamber thermally coupled to a heating element; and a microcontroller responsive to a user input indicative of a target reduction value of raffinose family oligosaccharides content within said legumes, wherein the microcontroller is arranged to control a duration of a soaking process of said legumes in water within the food processing chamber by controlling the heating element such as to maintain the water temperature within said food preparation chamber at a temperature in a range of 40-70°C during said soaking process, said duration of the soaking process being a function of said indicated target reduction value; and generate a control signal indicative of the end of said soaking process for triggering the removal of said water from the food preparation chamber.

The present invention is based on the insight that the reduction of the RFO content of legumes by soaking in water can be accurately controlled by controlling both the duration of the soaking process and the temperature at which this process is performed in order to achieve a prepared legume that can be consumed by a particular user based on his or her digestive tolerance towards the legumes, which digestive tolerance defines the target reduction value of the RFO content of the legumes during the soaking process. Importantly, if the legumes are soaked at a temperature below 40°C, the RFO extraction from the legumes can become ineffective, whereas if the legumes are soaked at a temperature above 70°C, the α-galactosidase within the legumes may deactivate, thereby preventing the α-galactosidase from contributing to the reduction of the RFO content of the legumes during the soaking process. Preferably, the soaking process is performed with the water at a temperature in a range of 50-65°C to achieve the optimal activity of α-galactosidase within the legumes. It is furthermore important that the water used for the soaking is removed from the legumes prior to any further preparation, e.g. cooking, of the legumes to effectively remove the RFOs from the legumes (as during soaking the RFOs have leached into the soaking water, which may be partially reabsorbed if the same water is used for a subsequent cooking process), which is addressed by the microcontroller generating a control signal for triggering the removal of the soaking water from the kitchen appliance upon completion of the soaking process.

To this end, the kitchen appliance may further comprise at least one of a sensory output signal generator responsive to said control signal; and a drainage valve in fluid communication with the food processing chamber responsive to said control signal in order to facilitate manual or automated draining of the soaking water from the kitchen appliance upon completion of the soaking process.

Preferably, the kitchen appliance further comprises a user interface communicatively coupled to the microcontroller, wherein the user interface comprises a plurality of selection options, each of said selection option corresponding to a target reduction value of raffinose family oligosaccharides content within said legumes, and wherein said user input is a selection of one of said selection options; and the microcontroller is adapted to control the duration of the soaking process as a function of the target reduction value of raffinose family oligosaccharides content within said legumes corresponding to the selected selection option. This allows a user to select a reduction level of the RFO content in accordance with his or her digestive tolerance towards the legumes. For example, the user may be provided with a questionnaire in which the user is to provide answers to questions targeted to determine the user's digestive tolerance towards legume consumption, which answers may be used to provide a recommendation as to which selection option the user should choose based on his or her digestive tolerance towards the legume consumption. In a particular embodiment, such a legume digestive tolerance questionnaire for a user may form part of the user interface, with the microcontroller adapted to select one of said selection options based on answers of said user to the legume digestive tolerance questionnaire.

Each selection option may correspond to a range of values for said target reduction value of raffinose family oligosaccharides content within said legumes, and the microcontroller may be adapted to select the target reduction value from said range of values corresponding to the selected selection option received from the user interface. Such ranges for instance may be leveraged in gradually improving the tolerance of the user's digestive system towards legumes digestion by incremental lowering of the target reduction value selected from a selected range of selection values if user feedback about the digestion of previously prepared legumes with the kitchen appliance justifies such a lowering of the target reduction value. For instance, the microcontroller may be adapted to, in response to historic digestive tolerance information received from said user where said information exhibits a trend indicative of an increasing digestive tolerance of said user to said legumes, incrementally reduce the target reduction value selected from said range of values corresponding to the selection option received from the user interface and/or select the target reduction value from a selection option corresponding to a lower range of values for said target reduction value of raffinose family oligosaccharides content within said legumes than the selected selection option if a previously selected target reduction value selected from said range of values corresponding to the selection option received from the user interface defines a lower limit of said range of values.

The duration of the soaking process for each target reduction value of raffinose family oligosaccharides content within said legumes may be predefined, e.g. based on empirical data. This gives a good approximation of the reduction of RFO content of the legumes during the soaking process, but does not factor in seasonal changes in the initial RFO content of the legumes, e.g. through varying weather conditions between growing seasons.

Alternatively, the kitchen appliance further comprises a Brix sensor within the food preparation chamber communicatively coupled to the microcontroller, wherein the microcontroller is adapted to estimate an actual reduction value of raffinose family oligosaccharides content within said legumes from data received from the Brix sensor during said soaking process, compare the actual reduction value of said raffinose family oligosaccharides content with its target value and terminate the soaking process upon said actual value matching the target value. It has been surprisingly found that a Brix sensor is capable of accurately estimating the RFO content in the soaking water from changes in the refractive index of the soaking water, such that the reduction of the RFO content in the legumes can be accurately estimated from the data produced by such a Brix sensor.

Preferably, the microcontroller is adapted to estimate the actual reduction value of raffinose family oligosaccharides based on the formula: [RFO(lo) + RFO(ed)]/ RFO(tot), wherein RFO(lo) is an estimated amount of raffinose family oligosaccharides leached from said legumes into the water based on the data received from the Brix sensor, RFO(ed) is an estimated amount of enzymatically decomposed raffinose family oligosaccharides within said legumes as a function of the water temperature during said soaking process and elapsed amount of time of the soaking process, and RFO(tot) is the estimated total amount of raffinose family oligosaccharides within the legumes at the start of the soaking process. By also estimating the enzymatic decomposition of the RFO content within the legumes during the soaking process, a particularly accurate estimate of the total RFO reduction within the legumes during the soaking process can be achieved.

In a further embodiment, the microcontroller further is adapted to control a cooking process of said soaked legumes in water within the food processing chamber by controlling the heating element such as to maintain the water temperature within said food preparation chamber at a temperature above 70°C during said cooking process. In this embodiment, the kitchen appliance can be used for the full preparation process of the legumes, i.e. the soaking process and subsequent cooking process. As previously explained, the cooking process ideally should be performed using fresh water, i.e. not the water used for the soaking process to prevent reabsorption of the RFOs from the water into the legumes. Moreover, the cooking process should be performed at a temperature above 70°C to prevent further enzymatic reduction of the RFO content, which would lower the nutritional value of the legumes more than necessary for digestive control, and ensure proper cooking of the legumes.

The kitchen appliance may further comprise a mechanical stirrer within the food preparation chamber and a motor coupled to the mechanical stirrer under control of the microcontroller, wherein the microcontroller is adapted to engage said motor at least during the soaking process. It has been found that stirring the legumes during the soaking process may improve the efficiency of the RFO reduction of the legumes, in particular the leaching of RFOs into the soaking water, which therefore can reduce the duration of the soaking process.

In example embodiments, the kitchen appliance is an all-in-one cooker, an electronic pressure cooker or a cooking blender, but the kitchen appliance may take any suitable shape or form.

According to another aspect, there is provided a method of preparing legumes comprising determining a target reduction value of raffinose family oligosaccharides content within said legumes; soaking said legumes in water by maintaining the water temperature at a temperature in a range of 40-70°C for a duration being a function of said determined target reduction value; replacing the water in which the legumes have been soaked with fresh water; and cooking said soaked legumes in said fresh water at a temperature above 70°C. With such a method, the nutritional value of the prepared legumes may be tailored to an individual's needs by minimizing gastric discomfort when consuming the legumes whilst retaining as high as possible RFO content in the legumes for providing the individual with healthy dietary fibers, which can stimulate the growth of good microflora in the individual's gut. Determining the target selection value may comprise receiving a user selection from a plurality of selection options, each of said selection option corresponding to a range of target reduction values of raffinose family oligosaccharides content within said legumes; and controlling the duration of the soaking process as a function of the target reduction value of raffinose family oligosaccharides content within said legumes may correspond to the selected selection option and may comprise selecting the target reduction value from said range of values corresponding to the selected selection option. The selection of the target reduction value may be a function of the actual digestive tolerance of the user towards the legumes. To this end, the method may comprise tracking the digestive tolerance of the user over time and selecting the target reduction value based on the tracked digestive tolerance of the user. For example, the method may comprise obtaining historic digestive tolerance information to said legumes for said user, and, where said information exhibits a trend indicative of an increasing digestive tolerance of said user to said legumes, incrementally reducing the target reduction value selected from said range of values corresponding to the selected selection option; and/or selecting the target reduction value from a selection option corresponding to a lower range of values for said target reduction value of raffinose family oligosaccharides content within said legumes than the selected selection option if a previously selected target reduction value selected from said range of values corresponding to the selected selection option defines a lower limit of said range of values. In this manner, the method may incorporate a training regime in which the user's tolerance to digesting legumes is incrementally improved, e.g. by building up the appropriate gut flora over time, such that the RFO content of the legumes to be consumed by such a user can be gradually increased to improve the nutritional value of the legumes over time without causing increased gastric discomfort to the user.

In a particular embodiment, the method further comprises estimating an actual reduction value of raffinose family oligosaccharides content within said legumes with a Brix sensor during said soaking process, comparing the actual reduction value of said raffinose family oligosaccharides content with its target value and terminating the soaking process upon said actual value matching the target value, preferably wherein estimating the actual reduction value of raffinose family oligosaccharides based on the formula: [RFO(lo) + RFO(ed)]/ RFO(tot), wherein RFO(lo) is an estimated amount of raffinose family oligosaccharides leached from said legumes into the water based on the data received from the Brix sensor, RFO(ed) is an estimated amount of enzymatically decomposed raffinose family oligosaccharides within said legumes as a function of the water temperature during said soaking process and elapsed amount of the soaking process, and RFO(tot) is the estimated total amount of raffinose family oligosaccharides within the legumes at the start of the soaking process. As previously explained, this allows for a particularly accurate control over the RFO content of the legumes during the soaking process, such that a particularly good balance between the optimization of the nutritional value of the legumes and the minimization of gastric discomfort to the user can be struck.

### BRIEF DESCRIPTION OF THE DRAWINGS

Embodiments of the invention are described in more detail and by way of non-limiting examples with reference to the accompanying drawings, wherein:
FIG. 1 schematically depicts a cross-sectional view of a kitchen appliance according to an embodiment;
FIG. 2 schematically depicts a cross-sectional view of a kitchen appliance according to an alternative embodiment;
FIG. 3 schematically depicts an aspect of a kitchen appliance according to an embodiment;
FIG. 4 is a flowchart of a method according to an embodiment;
FIG. 5 schematically depicts a cross-sectional view of a kitchen appliance according to another embodiment;
FIG. 6 schematically depicts a cross-sectional view of a kitchen appliance according to yet another embodiment;
FIG. 7 is a graph showing a correlation between a Brix value of water in which legumes are soaked and RFO content of that water;
FIG. 8 is a graph showing the Brix value of water in which legumes are soaked as a function of time for soaking processes performed at different temperatures;
FIG. 9 is a graph showing the RFO content of raw and treated lentils on a dry weight basis for different soaking processes; and
FIG. 10 is a graph showing the distribution of RFO content between lentils soaked in water and the soaking water for different soaking processes.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

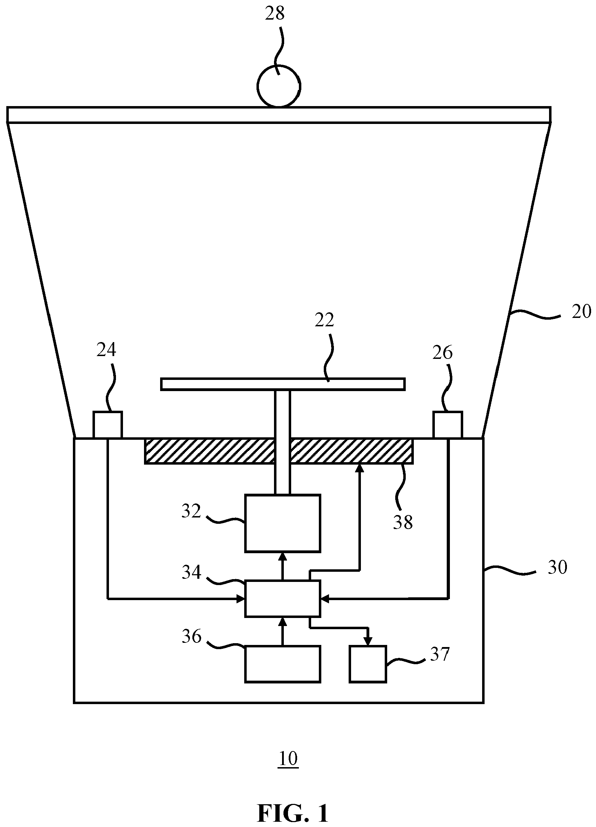

FIG. 1 schematically depicts a kitchen appliance 10 according to an embodiment. The kitchen appliance 10 comprises a food preparation chamber 20 and a housing 30. The food preparation chamber 20 may be detachable from the housing 30, e.g. for cleaning purposes, or may form an integral part of the housing 30. The food preparation chamber 20 may comprise a lid 28, e.g. a removable lid or a hinged lid, for sealing the food preparation chamber 20, e.g. during a food preparation process with the kitchen appliance 10. The housing 30 comprises a microcontroller 30 adapted to control a heating element 38 that is thermally coupled to the food preparation chamber 20 for heating the contents of the food preparation chamber 20. The heating element 38 may take any suitable shape and may be located in any suitable location, e.g. within or outside the food preparation chamber 20. A mechanical stirrer 22 may be present within the food preparation chamber 20, which mechanical stirrer 22 may be driven by a motor 32 under control of the microcontroller 34. It should be understood that the mechanical stirrer 22 under control of the motor 32 is entirely optional and may be omitted from the design of any of the herein described embodiments of the the kitchen appliance 10.

The kitchen appliance 10 may further comprise a user interface 36. In the context of the present application, the user interface 36 may mean a physical interface such as any combination of switches, knobs, dials, touch screens and so on, or may mean a communication interface, e.g. a wireless transceiver or he like, for receiving user instructions from a remote device, e.g. a portable device such as a smart phone, tablet computer or the like, through which the user may control the kitchen appliance 10.

The kitchen appliance 10 further comprises a sensory output signal generator 37 that can be activated through a control signal generated by the microcontroller 34, e.g. to signal the completion of a particular operation of the kitchen appliance 10. The sensory output signal generator 37 may produce an audible output signal, e.g. be a loudspeaker or the like, or may produce a visible output signal, e.g. be a light source such as a LED or the like, a display screen or the like and so on. The sensory output signal generator 37 may produce both an audible and a visible output signal, e.g. by combining any of the aforementioned example embodiments of the sensory output device 37. The kitchen appliance may further comprise a temperature sensor 26 thermally coupled to the food preparation chamber 20 for measuring the temperature within the food preparation chamber 20. The temperature sensor may be located within or outside the food preparation chamber 20 and is communicatively coupled to the microcontroller 34 such that the microcontroller 34 may control the heating element 38 such as to maintain the temperature in the food preparation chamber 20 within a defined temperature range or at a substantially constant temperature. The kitchen appliance according to embodiments of the present invention may take any suitable shape, e.g. an all-in-one cooker, electronic pressure cooker, cooking blender or the like.

The kitchen appliance 10 is adapted to implement a user-specific soaking process of legumes under control of the microcontroller 34 in order to control the RFO content within these legumes. To this end, the user typically directly or indirectly provides the microcontroller 34, e.g. through the user interface 36, with a target reduction value of the RFO content of the legumes based on the gastric tolerance of the user to the legumes.

In an example embodiment, the user may determine his or her gastric tolerance to the legumes by means of a questionnaire through which the user's gastric tolerance is derived from the answer the user has given to the questions in the questionnaire. Non-limiting examples of such questions include questions enquiring about the user's tendency to suffer from bloating, flatulence, cramps and other typical gastric upsets associated with legume consumption. Each question may offer a multiple choice of answers corresponding to varying degrees of experience of such gastric discomfort, from which the user's gastric tolerance to the legumes may be deducted. Such a deduction may be performed by the user. For instance, each multiple choice answer may be associated with an answer score, and the aggregate score of all answers may be compared against a table comprising non-overlapping aggregate score ranges each corresponding to a particular degree of gastric intolerance towards legume consumption. Alternatively, the user may be given a gastric intolerance score based on the prevalence of particular answer choices from the multiple choice answers, e.g. where answers (a) to the questions are associated with low gastric intolerance, answers (b) to the questions are associated with medium gastric intolerance, answers (c) are associated with high gastric intolerance, and so on. Of course, many other suitable implementations of such questionnaires and the derivation of the degree of the user's gastric intolerance therefrom are well-known per se, and it should be understood that the questionnaire may take any suitable shape or form.

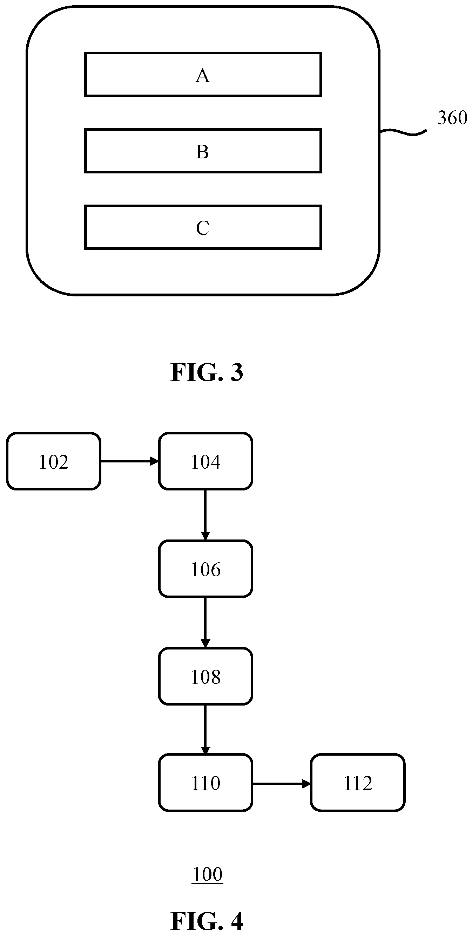

As shown in FIG. 3, the user interface 36 may incorporate a selection option menu 360 having a plurality of selection options A-C each corresponding to one of these degrees of gastric intolerance such that the user can select the appropriate selection option A-C from the selection menu 360 based on the outcome of the questionnaire. Alternative or additionally, the user interface 36 may incorporate the questionnaire, such that the microcontroller 34 can select the appropriate selection option based on the questionnaire answers the user has provided, which has the advantage of avoiding the risk that the user accidentally selects an inappropriate selection option A-C from the selection menu 360.

Each selection option A-C may be associated with a particular target reduction value of the RFO content, e.g. selection option A, corresponding to a high gastric intolerance towards legumes, may be associated with a target reduction value A1, selection option B, corresponding to a medium gastric intolerance towards legumes, may be associated with a target reduction value B1 and selection option C, corresponding to a low gastric intolerance towards legumes, may be associated with a target reduction value C1, in which A1>B1>C1. Preferably, as will be explained in further detail below, the selection options A-C are associated with non-overlapping ranges of target reduction values, e.g. selection option A, corresponding to a high gastric intolerance towards legumes, may be associated with a target reduction value range A1-A2, selection option B, corresponding to a medium gastric intolerance towards legumes, may be associated with a target reduction value range B1-B2 and selection option C, corresponding to a low gastric intolerance towards legumes, may be associated with a target reduction value range C1-C2, in which A1>A2>B1>B2>C1>C2.

The soaking of the legumes in order to achieve a target reduction of their RFO content in accordance with the obtained target reduction value may be performed with the kitchen appliance 10 based on the method 100, a flowchart of which is shown in FIG. 4. The method starts in 102, in which the user loads the legumes and water into the food preparation chamber 20 of the kitchen appliance 10, after which the method 100 proceeds to operation 104 in which the user provides the microcontroller 34 with the target RFO reduction value for the legumes as explained above. In operation 106, the microcontroller 34 controls the heating element 38 such as to maintain the temperature of the water within the food preparation chamber 20 in which the legumes are soaked at a temperature in a range of 40-70°C and preferably in a range of 50-65°C during the soaking process. This temperature range is chosen to ensure that the duration of the soaking process is as short as possible without deactivating the natural enzymes within the legumes that enzymatically break down the RFOs therein, e.g. naturally occurring α-galactosidase. This way, the RFO reduction within the legumes during the soaking process takes place along two routes: RFO leaching from the legumes into the soaking water and enzymatic conversion of the RFOs within the legumes by the naturally occurring enzymes therein.

In a preferred embodiment, the kitchen appliance 10 further comprises a Brix sensor 24 arranged to measure changes in the mass density, refractive index or infrared absorption of the soaking water within the food preparation chamber 20. The Brix sensor 24 is communicatively coupled to the microcontroller 34, with the microcontroller 34 being adapted to estimate the reduction in RFO content of the legumes being soaked from the data provided by the Brix sensor 24. As such Brix sensors are well-known per se, the Brix sensor 24 will not be explained in further detail for the sake of brevity only. It should be understood that any suitable implementation of the Brix sensor 24 may be used in the embodiments of the present invention.

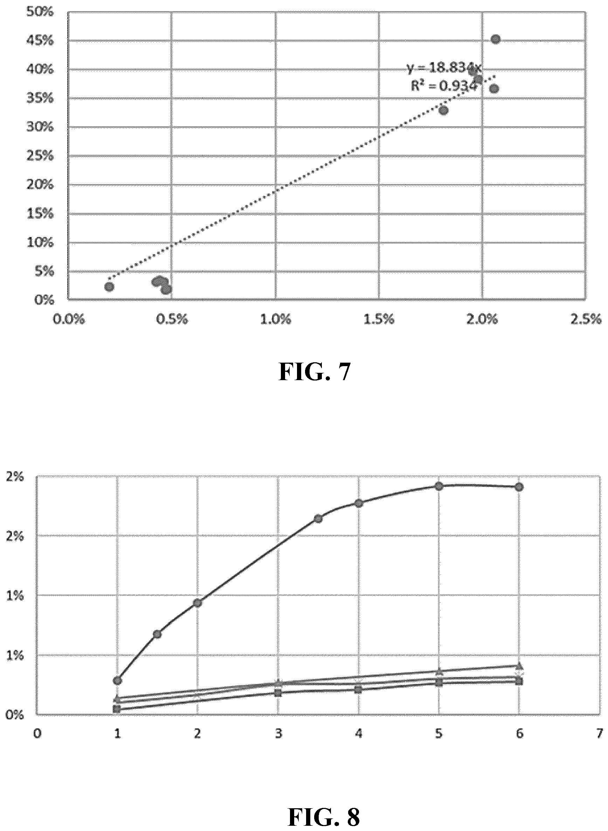

As demonstrated in the graph in FIG. 7, a linear correlation exists between the Brix value of the soaking water (x-axis) and the amount of RFOs leached out of legumes during the soaking (y-axis), such that the measured Brix value can be used by the microcontroller 34 to estimate when the user-specified target reduction value of the RFO content of the legumes being soaked has been reached, e.g. by implementing an algorithm that converts the Brix value measured with the Brix sensor 24 into an estimated reduction of the RFO content of the legumes being soaked. Preferably, this algorithm incorporates the formula: RFO(act) = [RFO(lo) + RFO(ed)]/ RFO(tot), wherein RFO(act) is the actual target reduction in the RFO content of the legumes being soaked, RFO(lo) is an estimated amount of raffinose family oligosaccharides leached from said legumes into the water based on the data received from the Brix sensor, RFO(ed) is an estimated amount of enzymatically decomposed raffinose family oligosaccharides within said legumes as a function of the water temperature during said soaking process and elapsed amount of time of the soaking process, and RFO(tot) is the estimated total amount of raffinose family oligosaccharides within the legumes at the start of the soaking process. This ensures a particularly accurate estimate of the actual reduction in the RFO content of the legumes being soaked, as the two main process contribution to this reduction, namely the leaching of RFOs from the legumes into the soaking water as well as the internal enzymatic conversion of the RFOs within the legumes during the soaking process are quantified. Of course, although RFO(act) is expressed as a fraction in the above formula, this is by way of non-limiting example only, and RFO(act) may be expressed in any suitable form, such as a percentage, in equally valid alternative formulae.

It is noted at this point that RFO(tot) may be determined by the microcontroller 34 in any suitable manner. For instance, the microcontroller 34 may use a single value for RFO(tot) independent of the type of legume that is being soaked. Preferably, the value of RFO(tot) is specific to the type of legume that is being soaked, which value may be obtained from the public domain, e.g. from scientific publications or nutritional databases, and made available to the microcontroller 34 in any suitable manner. This requires the determination of the type of legume, e.g. through specification of the user with the user interface 36 or by optical recognition of the type of legume within the food preparation chamber 20, e.g. using a camera (not shown) and an image recognition algorithm implemented by the microcontroller 34 such that the microcontroller 34 can identify the type of legume from the image(s) provided by this camera. The microcontroller 34 may incorporate a RFO(tot) value for each type of legume, e.g. within its algorithms, or instead may retrieve this value for a specific type of legume from a library, e.g. a look-up table or the like, which may be embodied by the kitchen appliance 10 or may be retrievable over a network connection between the kitchen appliance 10 and a remote device storing this information.

FIG. 8 is a graph depicting the effect of temperature and stirring on the RFO extraction from a legume (here lentils), with the x-axis depicting time (h) and the y-axis depicting Brix value (%) of the soaking water. The results of four different experiments are displayed in the graph. The line with dots shows the results of lentils soaked at 50°C without stirring with the mechanical stirrer 22, the line without markers shows the results of lentils soaked at 35°C without stirring with the mechanical stirrer 22, the line with triangles shows the results of lentils soaked at room temperature (25°C) with stirring with the mechanical stirrer 22 and the line with squares shows the results of lentils soaked at room temperature (25°C) without stirring with the mechanical stirrer 22. This graph clearly shows that at elevated temperatures, i.e. a temperature of 50°C, RFO reduction from the legumes is vastly accelerated, with a sharp increase in Brix value measured over the first 4 hours after which this value plateaus, indicating that RFO extraction from the legumes has been completed, whilst the room temperature experiments demonstrate that stirring during soaking also increases the extraction rate of RFOs from the legumes.

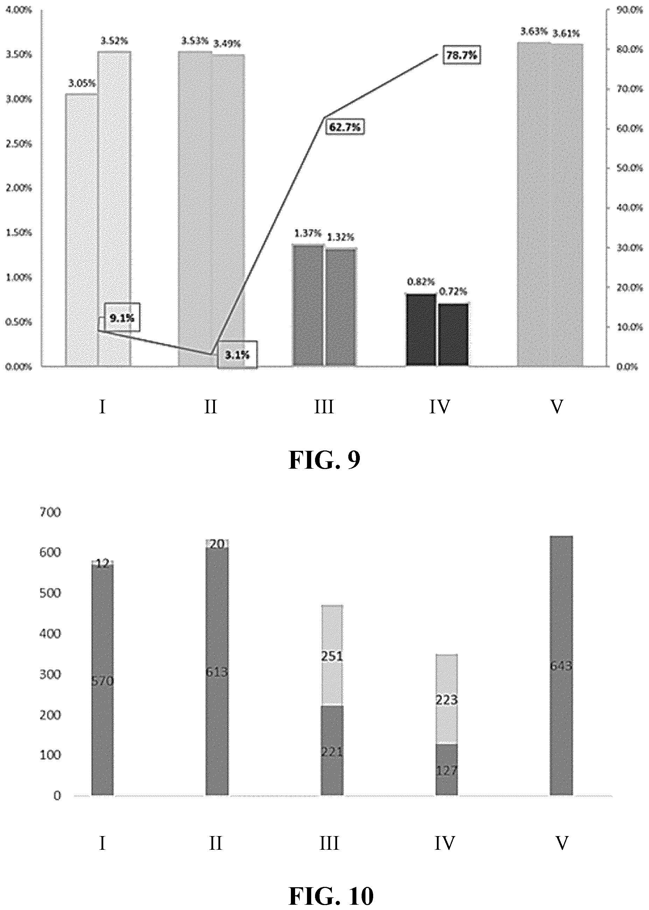

Furthermore, FIG. 9 depicts a bar diagram in which the RFO content (in %) in lentils on a dry weight basis is depicted for: lentils soaked at 25°C for 17 h (I), lentils soaked at 40°C for 3h (II), lentils soaked at 50°C for 3h (III), lentils soaked at 60°C for 1h (IV) and raw (unsoaked) lentils (V), with FIG. 9 further depicting a line showing the RFO reduction in % relative to the raw lentils for the soaking experiments (I)-(IV). Each experiment is represented by two bars, as each experiment is performed twice using a different batch of lentils, which is why for the raw lentils two bars (representing the two different batches) are shown at (V), with FIG. 10 depicting for each of the experiments (I)-(IV) the amount of RFOs (in mg) remaining in the lentils (dark part of the bar) and in the soaking water (light part of the bar). Obviously, as the raw lentils (V) have not been soaked, the bar for the raw lentils only exhibits a dark part.

These experiments make it clear that when the soaking is performed at a water temperature within a temperature range of 40-70°C and particularly within a temperature range of 50-65°C, the RFO reduction rate from the legumes is accelerated by the combined RFO leaching from the legumes into the soaking water and enzymatic conversion of the RFOs within the legumes, the latter process terminating at temperatures above 65-70°C due to the thermal instability of the enzymes within the legumes, most notably α-galactosidase.

Upon determining in operation 106 that the actual reduction of RFO content in the legumes matches the selected target reduction value, the microcontroller terminates operation of the heating element 38 and generates a control signal in operation 108 to signal the completion of the soaking operation. As previously explained, in the kitchen appliance schematically depicted in FIG. 1, the control signal triggers the generation of a sensory output with the sensory output signal generator 37 such that a user may be alerted that the soaking process has been completed in order to trigger the user is manually draining the soaking water from the soaked legumes.

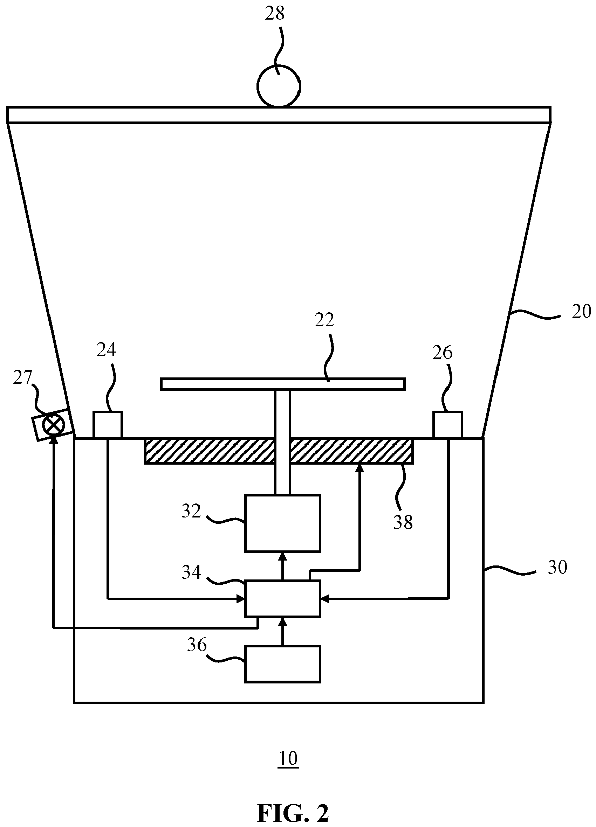

Alternatively, as schematically depicted in FIG. 2, the kitchen appliance 10 may further comprise a drainage valve 27 in fluid communication with the food processing chamber 10 responsive to the control signal generated by the microcontroller 34 such that the soaking water can be automatically drained from the food processing chamber 20 without requiring user intervention. The drainage valve 27 may terminate external to the kitchen appliance 10 such that the soaking water to be drained away can be collected in a receptacle paced by the user underneath the drainage valve 27, or alternatively the drainage valve 27 may terminate in a removable reservoir (not shown) of the kitchen appliance 10, such that the user can discard the soaking water from the reservoir at any suitable point in time by removal of the reservoir from the kitchen appliance 10. Of course, the kitchen appliance 10 may contain both the drainage valve 27 and the sensory output signal generator 37 such that even where the drainage of the soaking water from the food preparation chamber 20 at the end of the soaking process is automated through activation of the drainage valve 27, the user may still be alerted through activation of the sensory output signal generator 37 that the soaking process has completed, e.g. to allow a user to remove the soaked legumes from the kitchen appliance 10 or start cooking of the soaked legumes within the kitchen appliance without delay.

In some embodiments, the kitchen appliance 10 may be further adapted to implement a cooking process of the soaked legumes in operation 110 of the method 100. Prior to this cooking process, fresh water preferably should be added to the legumes within the food processing chamber 20 as use of the soaking water may lead to reabsorption of some of the RFOs in the soaking water by the legumes during the cooking process, which would lead to levels of RFOs within the cooked legumes that may be too high for the user, thus leading to unwanted gastric discomfort as previously explained. Similarly, during the cooking process, the microcontroller 34 typically controls the heating element 38 such as to maintain the temperature of the cooking water above 70°C in order to suppress further enzymatic conversion of the remaining RFO content of the legumes being cooked by its naturally occurring enzymes such as α-galactosidase and ensure proper cooking of the legumes. The cooking process may be performed for a defined period of time, e.g. a user-specified period of time or a period of time predefined in the microcontroller 34, after which, upon completion of the optional cooking step 110, the method 100 terminates in operation 112.

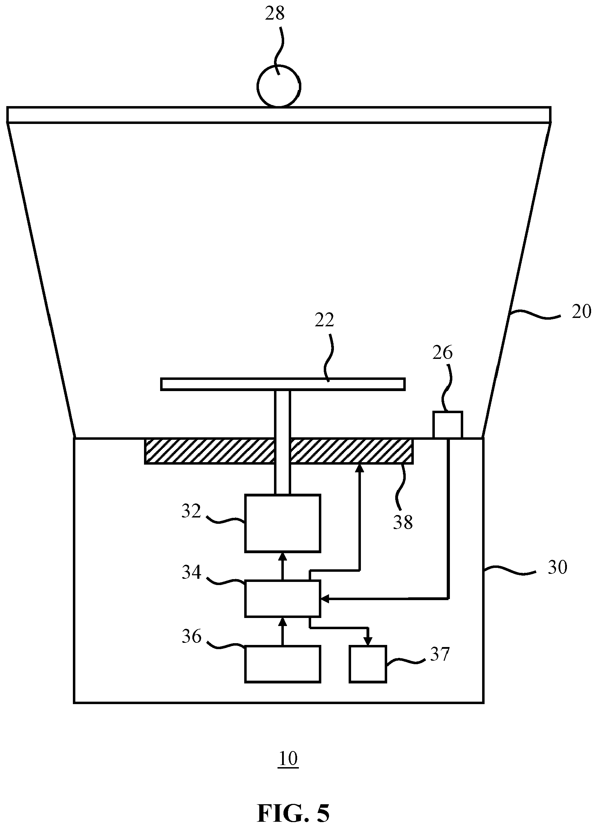

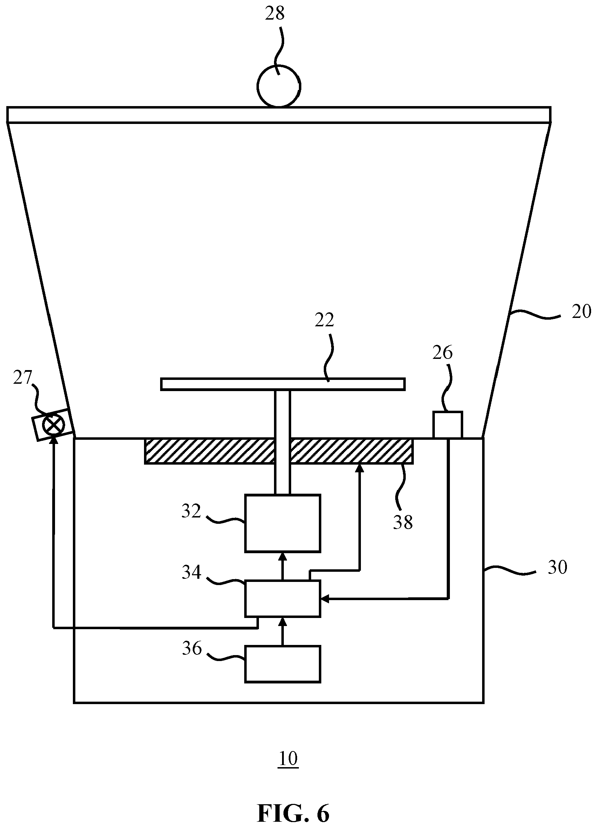

At this point it is noted that the Brix sensor 24 is not essential to the estimation of the total reduction of the RFO content in the legumes during the soaking process. For example, FIG. 5 schematically depicts a kitchen appliance 10 from which the Brix sensor has been omitted in which drainage of the soaking water is to be manually performed by a user as triggered by the sensory output signal 37 and FIG. 6 schematically depicts a kitchen appliance 10 from which the Brix sensor has been omitted in which drainage of the soaking water is to automatically performed through the drainage valve 27 being engaged by the microcontroller 34 upon completion of the soaking process. In these embodiments, the duration of the soaking process may be a function of the temperature at which the soaking process is performed and the obtained target reduction value of the RFO content of the legumes to be soaked, and may be empirically determined, e.g. through a series of experiments in which the reduction in RFO contents of different types of legumes as a function of duration of the soaking process and temperature at which the soaking process is performed is determined using routine experimental techniques.

It is furthermore noted that the described embodiments of the kitchen appliance 10 may comprise additional features that are not described in detail above. For instance, the kitchen appliance 10 may comprise a water reservoir in fluid communication with the food preparation chamber 20 through a water release valve under control of the microcontroller 34 such that the soaking water or cooking water for the legumes may be automatically added to the food preparation chamber 20. The kitchen appliance 10 further may comprise a weight sensor for weighing the contents of the food preparation chamber 20, such that the amount of water to be added to the legumes from the water reservoir can be accurately metered through control of the water release valve based on the weight of the legumes in the food preparation chamber 20. Many other variations may be contemplated.

In a particularly preferred embodiment, the method 100 and kitchen appliance 10 further include a training regime for increasing the user's digestive tolerance towards legume consumption. To this end, the target reduction value of the RFO content of the legumes to be used for controlling the duration of the soaking process of the legumes may be based in part on a recorded history of the user's digestive tolerance towards legume consumption. For example, after the initial assessment of the user's digestive tolerance towards legume consumption as established using the aforementioned questionnaire, the next N soaking processes of the legumes, in which N is a positive integer preferably in a range of 1-5, may be controlled using the target reduction value obtained from the user's responses to the questionnaire, e.g. by storing this value and associated user on a data storage device accessible to the microcontroller 34, e.g. a data storage device forming part of the kitchen appliance 10 or a remote data storage device accessible to the microcontroller 34 over a network connection between the kitchen appliance 10 and the remote data storage device. When a user is recognized by the kitchen appliance 10 (or the method 100), e.g. through providing identification information through the user interface 36, the microcontroller 34 may use the previously determined target reduction value for that user if n<N, in which n is the number of previous legume preparations performed using the previously determined target reduction value, or where n=N, the user may be prompted to provide additional information indicative of the up to date digestive tolerance of the user towards legume consumption. This for instance may simply involve a yes/no question to be answered by the user in the form of "has your digestive tolerance improved?" or the like, and only if this question is answered affirmatively may the target reduction value for the RFO content of the legumes during the soaking process be adjusted. Of course, the user feedback regarding changes in his or her digestive tolerance towards legume consumption may take any suitable form, including (partial) re-use of the previously described user questionnaire.

Where the user feedback is indicative of an improvement in the user's digestive tolerance towards legume consumption over time, e.g. decreased flatulence or the like, the target reduction value of the RFO content of the legumes for controlling the duration of the soaking process may be incrementally reduced such as to gradually increase the RFO content of the soaked legumes. This is beneficial, as digestion of the RFOs can improve the gut flora of the user such that it is desirable to maximize the RFO content in the soaked legumes as much as possible without causing gastric discomfort such as excessive flatulence.

In the above described embodiment of the selection options A-C of the selection menu 360 each corresponding to a range of target reduction values, e.g. target reduction values ranges A1-A2, B1-B2 and C1-C2 respectively, such incremental reduction of the target reduction value in response to the historic digestive tolerance information received from said user exhibiting a trend indicative of an increasing digestive tolerance of the user to the legumes may for example be implemented as follows. The initial target reduction value for controlling the duration of the legume soaking process may be set as the upper limit of the range of target reduction values associated with the selection option A, B or C that has been selected by the user following completion of the questionnaire (or microcontroller 34 in case of the user interface 36 implementing the questionnaire). For example, upon selection of selection option A, the microcontroller sets the target reduction value to the upper limit of the range of target reduction values associated with selection option A, i.e. A1.

Upon receiving the historic digestive tolerance information exhibiting a trend indicative of an increasing digestive tolerance of the user to the legumes, the microcontroller 34 may incrementally reduce the previously selected target reduction value, e.g. the microcontroller 34 may reduce the previously selected value, e.g. A1 by a defined amount to update the target reduction value to Aactuai. This process may be repeated each time the updated digestive tolerance information exhibits a trend indicative of an increasing digestive tolerance of the user to the legumes having been soaked using the actual target reduction value, e.g. Aactuai.
Once the actual target reduction value equals the lower end point of the range of the selected selection option, e.g. Aactuai = A2, a further reduction of the actual target reduction value in response to the updated digestive tolerance information exhibiting a trend indicative of an increased digestive tolerance of the user to the legumes having been soaked using that actual target reduction value may cause the new target reduction value to be selected from a selection option corresponding to a lower range of values for the target reduction value of RFO content within the legumes than the selected selection option, e.g. from the next selection option, such as selection option B if the actual target reduction value to be updated equals the lower end point of the range of target reduction values of selection option A. Upon adjusting the target reduction value of the RFO content of the legumes during the soaking process as described above, the adjusted target reduction value may be stored by the microcontroller 34, e.g. in the data storage device, and the counter n may be reset to 0 as will be readily understood from the foregoing.

Of course, it should be understood that the target reduction value may be updated in any suitable manner following the reception of digestive tolerance information exhibiting a trend indicative of an increased digestive tolerance of the user to the legumes having been soaked using that target reduction value, and that the above embodiments are provided by way of non-limiting example only. Moreover, the above training mode of the user's digestive tolerance towards legume consumption is not only limited to the reduction of the target reduction value of the RFO content of such legumes for controlling the soaking process of the legumes. It is equally feasible to increase the target reduction value of the RFO content of such legumes for controlling the soaking process of the legumes where the historic digestive tolerance information exhibits a trend indicative of a decreased digestive tolerance of the user to the legumes having been soaked using that target reduction value. Nevertheless, an important goal of this training program is to gradually improve the user's gastric tolerance towards RFOs such that the nutritional value of the legumes consumed by the user and his or her gastric health can be improved over time.

At this point it is also noted that although the embodiments of the method 100 have been described in the context of the implementation of the various operations forming part of the method 100 by the kitchen appliance 100, it should be understood that the method 100 may be implemented using any suitable legume preparation setup, e.g. an industrial setup in which the legumes are soaked and cooked in accordance with a target reduction value for the RFO content of the legumes, e.g. to provide prepared legumes for people having a particular digestive tolerance towards such legumes, e.g. to produce prepared legumes having high, medium or low RFO contents for people with low, medium or high digestive tolerance to legume consumption respectively, thereby for instance providing differently prepared legumes for specific consumer groups.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A kitchen appliance (10) for preparing legumes, the kitchen appliance comprising:
a food preparation chamber (20) thermally coupled to a heating element (38); and
a microcontroller (34) responsive to a user input indicative of a target reduction value of raffinose family oligosaccharides content within said legumes, wherein the microcontroller is arranged to:
control a duration of a soaking process of said legumes in water within the food processing chamber by controlling the heating element such as to maintain the water temperature within said food preparation chamber at a temperature in a range of 40-70°C during said soaking process, said duration of the soaking process being a function of said indicated target reduction value; and
generate a control signal indicative of the end of said soaking process for triggering the removal of said water from the food preparation chamber.

2. The kitchen appliance (10) of claim 1, further comprising at least one of:
a sensory output signal generator (37) responsive to said control signal; and
a drainage valve (27) in fluid communication with the food processing chamber (10) responsive to said control signal.

3. The kitchen appliance (10) of claim 1 or 2, further comprising a user interface (36) communicatively coupled to the microcontroller (34), wherein:
the user interface comprises a plurality of selection options (A-C), each of said selection option corresponding to a target reduction value of raffinose family oligosaccharides content within said legumes, and wherein said user input is a selection of one of said selection options; and
the microcontroller is adapted to control the duration of the soaking process as a function of the target reduction value of raffinose family oligosaccharides content within said legumes corresponding to the selected selection option.

4. The kitchen appliance (10) of claim 3, wherein each selection option (A-C) corresponds to a range of values for said target reduction value of raffinose family oligosaccharides content within said legumes, and the microcontroller (34) is adapted to select the target reduction value from said range of values corresponding to the selected selection option received from the user interface (36).

5. The kitchen appliance (10) of claim 4, wherein the microcontroller (34) is adapted to, in response to historic digestive tolerance information received from said user where said information exhibits a trend indicative of an increasing digestive tolerance of said user to said legumes:
incrementally reduce the target reduction value selected from said range of values corresponding to the selection option (A-C) received from the user interface (36); and/or
select the target reduction value from a selection option corresponding to a lower range of values for said target reduction value of raffinose family oligosaccharides content within said legumes than the selected selection option if a previously selected target reduction value selected from said range of values corresponding to the selection option (A-C) received from the user interface (36) defines a lower limit of said range of values.

6. The kitchen appliance (10) of any of claims 3-5, wherein the user interface (36) comprises a legume digestive tolerance questionnaire for a user, and wherein the microcontroller (34) is adapted to select one of said selection options (A-C) based on answers of said user to the legume digestive tolerance questionnaire.

7. The kitchen appliance (10) of any of claims 1-6, wherein the duration of the soaking process for each target reduction value of raffinose family oligosaccharides content within said legumes is predefined.

8. The kitchen appliance (10) of any of claims 1-7, further comprising a Brix sensor (24) within the food preparation chamber (20) communicatively coupled to the microcontroller (34), wherein the microcontroller is adapted to:
estimate an actual reduction value of raffinose family oligosaccharides content within said legumes from data received from the Brix sensor during said soaking process;
compare the actual reduction value of said raffinose family oligosaccharides content with its target value; and
terminate the soaking process upon said actual value matching the target value.

9. The kitchen appliance (10) of claim 8, wherein the microcontroller (34) is adapted to estimate the actual reduction value of raffinose family oligosaccharides based on the formula: [RFO(lo) + RFO(ed)]/ RFO(tot), wherein RFO(lo) is an estimated amount of raffinose family oligosaccharides leached from said legumes into the water based on the data received from the Brix sensor, RFO(ed) is an estimated amount of enzymatically decomposed raffinose family oligosaccharides within said legumes as a function of the water temperature during said soaking process and elapsed amount of time of the soaking process, and RFO(tot) is the estimated total amount of raffinose family oligosaccharides within the legumes at the start of the soaking process.

10. The kitchen appliance (10) of any of claims 1-9, wherein the microcontroller (34) further is adapted to control a cooking process of said soaked legumes in water within the food processing chamber by controlling the heating element such as to maintain the water temperature within said food preparation chamber at a temperature above 70°C during said cooking process.

11. The kitchen appliance (10) of any of claims 1-10, further comprising a mechanical stirrer (22) within the food preparation chamber (20) and a motor (32) coupled to the mechanical stirrer under control of the microcontroller (34), wherein the microcontroller is adapted to engage said motor at least during the soaking process.

12. A method (100) of preparing legumes comprising:
determining a target reduction value of raffinose family oligosaccharides content within said legumes;
soaking said legumes in water by maintaining the water temperature at a temperature in a range of 40-70°C for a duration being a function of said determined target reduction value;
replacing the water in which the legumes have been soaked with fresh water; and
cooking said soaked legumes in said fresh water at a temperature above 70°C.

13. The method of claim 12, wherein:
determining said target selection value comprises receiving a user selection from a plurality of selection options (A-C), each of said selection option corresponding to a range of target reduction values of raffinose family oligosaccharides content within said legumes; and
controlling the duration of the soaking process as a function of the target reduction value of raffinose family oligosaccharides content within said legumes corresponds to the selected selection option and comprises selecting the target reduction value from said range of values corresponding to the selected selection option.

14. The method of claim 13, further comprising:
obtaining historic digestive tolerance information to said legumes for said user;
and, where said information exhibits a trend indicative of an increasing digestive tolerance of said user to said legumes:
incrementally reducing the target reduction value selected from said range of values corresponding to the selected selection option; and/or
selecting the target reduction value from a selection option corresponding to a lower range of values for said target reduction value of raffinose family oligosaccharides content within said legumes than the selected selection option if a previously selected target reduction value selected from said range of values corresponding to the selected selection option defines a lower limit of said range of values.

15. The method of any of claims 12-14, further comprising:
estimating an actual reduction value of raffinose family oligosaccharides content within said legumes with a Brix sensor during said soaking process;
comparing the actual reduction value of said raffinose family oligosaccharides content with its target value; and
terminating the soaking process upon said actual value matching the target value, preferably wherein estimating the actual reduction value of raffinose family oligosaccharides based on the formula: [RFO(lo) + RFO(ed)]/ RFO(tot), wherein RFO(lo) is an estimated amount of raffinose family oligosaccharides leached from said legumes into the water based on the data received from the Brix sensor, RFO(ed) is an estimated amount of enzymatically decomposed raffinose family oligosaccharides within said legumes as a function of the water temperature during said soaking process and elapsed amount of the soaking process, and RFO(tot) is the estimated total amount of raffinose family oligosaccharides within the legumes at the start of the soaking process.
